# EUROPEAN PATENT SPECIFICATION

(11) **EP 2 917 010 B1**
(45) Date of publication and mention of the grant of the patent: **18.10.2017**
(21) Application number: 13811314.7
(22) Date of filing: 04.12.2013
(51) Int. Cl.: B29B 9/10, B01J 19/18, B01J 4/00

(54) **METHOD OF PRODUCING MONOMER DROPLETS**
VERFAHREN ZUR HERSTELLUNG VON MONOMEREN TRÖPFCHEN
PROCÉDÉ DE PRODUCTION DE GOUTTELETTES DE MONOMÈRE

(30) Priority: 17.12.2012 US 201261737890 P
(43) Date of publication of application: 16.09.2015
(73) Proprietor: Rohm and Haas Company, Philadelphia, PA 19106 (US)
(72) Inventor: LIU, Yuanqin, Ambler, Pennsylvania 19002 (US); MARTIN, Collin H., North Wales, Pennsylvania 19454 (US)
(74) Representative: Houghton, Mark Phillip
(86) International application number: PCT/US2013/072970
(87) International publication number: WO 2014/099361

(56) References cited:
- DE-A1-102004 040 735
- US-A1- 2006 102 519
- US-A1- 2009 192 035
- US-A1- 2009 192 036
- US-A1- 2012 175 798

## Description

It is sometimes desired to provide a dispersion of monomer droplets in an aqueous medium. One use for such a dispersion is to polymerize the monomer within each droplet to form a dispersion of polymer particles. It is desired that the monomer droplets have a uniform size distribution. It is also desirable to use a process for making the monomer droplets that allows control over the particle size; in particular, it is desirable to use a process that allows for making smaller size particles. It is also desirable that, when polymer particles are made from such monomer droplets, those polymer particles also have small size and uniform size distribution.

US 2012/0175798 describes a method of preparing spheroidal polymer beads in which a first volume, which contains a monomer phase, is dispersed through the pores of a metallic membrane into a second volume, which contains an aqueous liquid immiscible with the monomer phase.

It is desired to provide a process that gives greater control over particle size than the method described by US 2012/0175798, preferably without recourse to changes in the operation of the mechanical apparatus associated with the metallic membrane.

A first aspect of the present invention is a method according to claim 1 of producing monomer droplets dispersed in an aqueous medium, wherein said method comprises (a) providing an apparatus comprising a metallic membrane having a plurality of through holes; wherein a monomer phase is in contact with a first side of said membrane; wherein an aqueous medium is in contact with a second side of said membrane; wherein said monomer phase is insoluble in said aqueous medium; wherein said aqueous medium comprises 0.2% or more of one or more surfactant, by weight based on the weight of the aqueous medium; and (b) conveying said monomer phase through said through holes into said aqueous medium under conditions sufficient to form a plurality of monomer droplets; wherein a shear force is applied at a point of egression of the monomer phase into the aqueous medium; wherein the direction of shear is perpendicular to the direction of egression of the monomer phase.

A second aspect of the present invention is a method according to claim 6 of making polymer particles comprising producing monomer droplets by performing the method of claim 1 and then polymerizing some or all of the monomer in said monomer droplets.

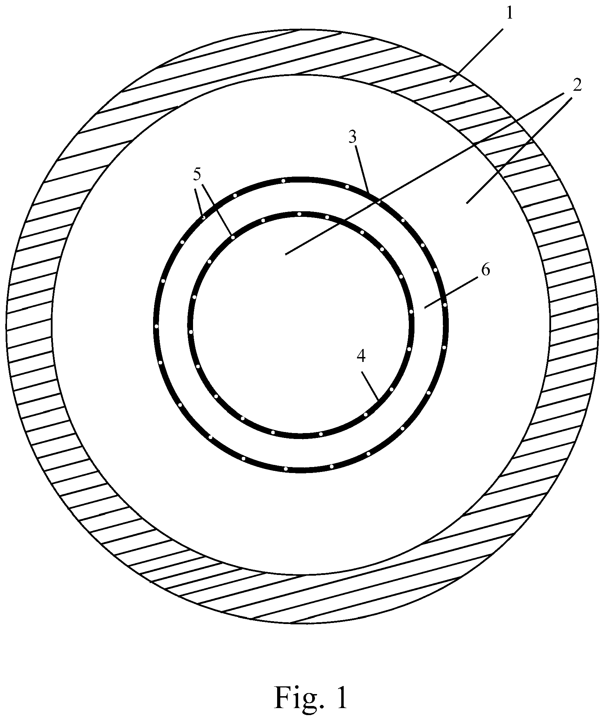

Figure 1 is a top view of an embodiment of the apparatus used in the present invention. The apparatus in contained in a cylindrical outer container 1. A cylindrical monomer phase container is present inside the cylindrical outer container 1. The monomer phase container has a cylindrical outer wall 3 and a cylindrical inner wall 4. Aqueous medium 2 is present between the wall of cylindrical outer container 1 and the outer wall 3 of the monomer phase container. Aqueous medium 2 is also present inside the inner wall 4 of the monomer phase container. Monomer phase 6 is present between the outer wall 3 and the inner wall 4 of the monomer phase container. Both the outer wall 3 and the inner wall 4 of the monomer phase container have through holes 5.

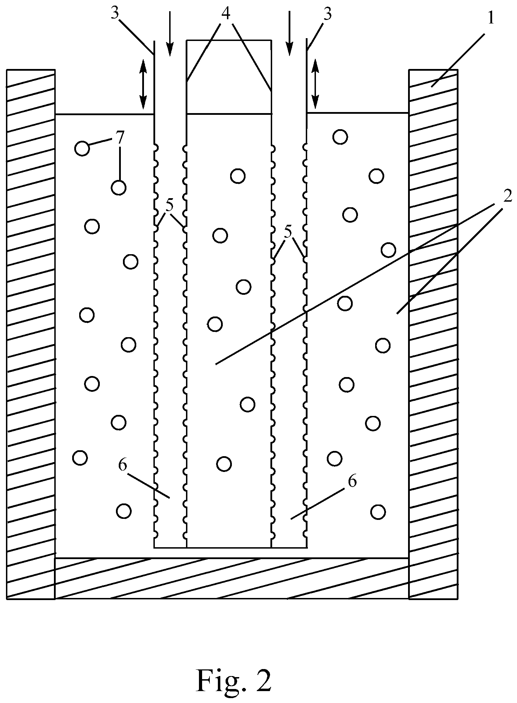

Figure 2 is a side view of the same apparatus. Figure 2 also shows the presence of monomer droplets 7. The single-headed arrows in Figure 2 show that monomer phase is fed from above into the monomer phase container in between outer wall 3 and inner wall 4. The double-headed arrows in Figure 2 show that the monomer phase container is mechanically vibrated up and down.

As used herein, the following terms have the designated definitions, unless the context clearly indicates otherwise.

As used herein, a monomer is a compound that is a liquid at 25°C and is capable of undergoing a polymerization reaction to form a polymer having molecular weight of greater than 5,000 Da. A vinyl monomer is a monomer that has one or more vinyl group. A vinyl group contains a carbon-carbon double bond that is capable of participating in free-radical polymerization. Vinyl aromatic monomers contain one or more aromatic ring. Acrylic monomers are (meth)acrylic acid, esters thereof, amides thereof, and (meth)acrylonitrile. "(Meth)acryl" means acryl or methacryl. Monovinyl monomers have one vinyl group per molecule. Multivinyl monomers have more than one vinyl group per molecule.

A monomer phase is a liquid at 25°C that contains one or more monomer, and the total amount of all monomer in the monomer phase is 20% or more by weight based on the weight of the monomer phase.

As used herein, an initiator is a molecule that is capable, upon exposure to an appropriate stress, of forming one or more free radical that can initiate free-radical polymerization. Appropriate stress may be application of temperature above 25°C, exposure to radiation, exposure to certain reagents, or other stresses.

As used herein, an aqueous medium is a liquid at 25°C and contains 60% or more water by weight based on the weight of the aqueous medium. A composition is said herein to be insoluble in an aqueous medium if the maximum amount of that composition that will dissolve in the aqueous medium at 25°C is 0.5% or less by weight based on the weight of the aqueous medium.

As used herein, a surfactant is a molecule that has a hydrophilic portion and a hydrophobic portion and that has molecular weight of 5,000 Da or less.

Monomer droplets are spheroidal particles that contain a monomer phase. Monomer droplets are said to be dispersed in an aqueous medium if the monomer droplets are distributed throughout the aqueous medium, the aqueous medium is continuous, and when the composition is stored for 24 hours at 25°C no significant amount of phase separation occurs.

The particle sizes in a distribution of particles (such as monomer droplets or polymer particles) may be characterized by the following parameters. 60% by volume of the particles have diameter equal to or less than D60. 50% by volume of the particles have diameter equal to or less than D50. 10% by volume of the particles have diameter equal to or less than D10. The uniformity coefficient (UC) is the quotient obtained by dividing D60 by D10.

As used herein, the term "porogen" is defined as a material that is capable of forming pores.

As used herein, a membrane is an object that is relatively thin in one dimension; membranes have thickness of 10 mm or less. A through hole is a hole that penetrates all the way through a membrane in the thin dimension.

The membrane used in the present invention is made partially or wholly of metal, more preferably made wholly of metal. Preferably the membrane is made of steel or nickel. Preferably the membrane is treated prior to use with one or more chemical reagents to remove surface oxide layers.

The membrane contains a plurality of through holes. The through holes may be cylindrical or conical or a combination thereof. The membrane holes may be fabricated by any method. For example, the membrane holes may be fabricated by drilling, laser treating, electro-forming, or water jetting the membrane. The membrane holes are preferably electroformed by electroplating or electroless plating of nickel on a suitable mandrel.

The shape of the membrane may vary. Preferably, the membrane may be in the form of a cylinder, spiral wound, or flat. Cylinders may be single-walled or double-walled. More preferably, the membrane is in the form of a double walled cylinder. When the membrane is in the shape of a cylinder, the outer diameter of the cylinder is preferably 5 cm or larger. When the membrane is in the shape of a cylinder, the outer diameter of the cylinder is preferably 30 cm or smaller.

The thickness of the membrane is preferably 0.1 mm or more; more preferably 0.2 mm or more; more preferably 0.4 mm or more; more preferably 0.8 mm or more. The thickness of the membrane is preferably 20 mm or less; more preferably 10 mm or less; more preferably 5 mm or less; more preferably 2 mm or less. When the membrane used is a double-walled cylinder, "thickness of the membrane" refers to the thickness of one wall.

The diameter of the through holes is preferably 1 micrometer or more; more preferably 2 micrometer or more; more preferably4 micrometer or more. The diameter of the through holes is preferably 100 micrometer or less; more preferably 50 micro meter or less; more preferably 30 micrometer or less.

The membrane preferably has 500 to 5000 pores per square centimeter.

Preferably the composition of the aqueous medium contains water in the amount, by weight based on the weight of the aqueous medium, 70% or more; more preferably 80% or more; more preferably 90% or more.

The monomer phase contains one or more monomer. Preferably each monomer is insoluble in the aqueous medium. Preferably, the maximum amount of each monomer that can dissolve in the aqueous medium at 25°C is, by weight based on the weight of the aqueous medium, 0.2% or less; more preferably 0.1% or less. Preferred are vinyl monomers. Preferred are aromatic vinyl monomers and acrylic monomers. Preferred aromatic vinyl monomers include styrene, alkyl-substituted styrenes, other substituted styrenes, and multivinyl aromatic monomers. Preferred alkyl-substituted styrene is alpha-methyl styrene. Preferred multivinyl aromatic monomers are divinyl benzene and divinyl naphthalene; more preferred is divinyl benzene. Preferred acrylic monomers are esters of (meth)acrylic acid; more preferred are esters of methacrylic acid. Preferred esters of (meth)acrylic acid include substituted-alkyl esters, in which a functional group is attached to the alkyl group, and polyol multi-esters. A polyol multi-ester has the structure that would be formed if a polyol (a compound having two or more hydroxyl groups) form ester linkages with two or more molecules of (meth)acrylic acid. Preferred monomer phase contains a mixture of one or more monovinyl monomer and one or more multivinyl monomer. Preferred monomer phase contains either a mixture of one or more monovinyl aromatic monomer with one or more multivinyl aromatic monomer or a mixture of one or more monovinyl acrylic monomer with one or more multivinyl acrylic monomer.

In some embodiments, monomer phase contains a porogen. Suitable porogens include, for example, porogens selected from aliphatic hydrocarbons, aliphatic alcohols, aromatic esters, and mixtures thereof

The density of the monomer phase is preferably 0.6 g/mL or higher; more preferably 0.7 g/mL or higher; more preferably 0.75 g/mL or higher; more preferably 0.8 g/mL or higher. The density of the monomer phase is preferably 2 g/mL or lower; more preferably 1.7 g/mL or lower; more preferably 1.5 g/mL or lower; more preferably 1.3 g/mL or lower.

Optionally, the monomer phase may contain one or more monomer that is not insoluble in the aqueous phase, provided that the monomer phase as a whole is not soluble in the aqueous medium.

Preferably, the monomer phase also contains one or more initiator. Preferably, the initiator is soluble in the monomer phase. Preferably, the initiator is insoluble in the aqueous phase. Preferably, the initiator produces a useful amount of free radicals when heated to a temperature above 50°C. Preferred initiators are peroxygen initiators.

Preferably, the amount of material in the monomer phase other than monomers, porogens, and initiators is, by weight based on the weight of the monomer phase, 20% or less; more preferably 10% or less; more preferably 5% or less; more preferably 2% or less.

Preferably the amount of initiator in the monomer phase is, by weight based on the weight of the monomer phase, 5% or less; more preferably 2% or less. Preferably the amount of initiator in the monomer phase is, by weight based on the weight of the monomer phase, 0.1% or more; more preferably 0.2% or more; more preferably 0.5% or more.

If porogen is present, the preferred amount of porogen in the monomer phase is, by weight based on the weight of the monomer phase, 20% or more; more preferably 35% or more. If porogen is present, the preferred amount of porogen in the monomer phase is, by weight based on the weight of the monomer phase, 90% or less; more preferably 80% or less.

The aqueous medium contains one or more surfactant. Preferred surfactants are nonionic surfactants and anionic surfactants; more preferred are anionic surfactants. Preferably the molecular weight of the surfactant is 600 Da or lower; more preferably 400 Da or lower. Preferably the amount of surfactant in the aqueous medium is, by weight based on the weight of the aqueous medium, 5% or less; more preferably 3% or less; more preferably 2% or less. The amount of surfactant in the aqueous medium is, by weight based on the weight of the aqueous medium, 0.2% or more; more preferably 0.5% or more.

The aqueous medium may optionally contain one or more water-miscible organic solvent.

Preferably, the viscosity of the aqueous medium at 25°C, as measured by a Brookfield viscometer, is 50 mPa*s (50 cps) or less; more preferably 20 mPa*s (20 cps) or less; more preferably 10 mPa*s (10 cps) or less. Preferably, the viscosity of the aqueous medium at 25°C, as measured by a Brookfield viscometer, is 0.5 mPa*s (0.5 cps) or more; more preferably 0.75 mPa*s (0.75 cps) or more; more preferably 1 mPa*s (1 cps) or more.

Optionally, the aqueous medium contains one or more thickener. Thickeners have molecular weight greater than 5,000 Da. Suitable thickeners include polyvinylalcohol, polyvinylpyrrolidone, polyvinylcaprolactam, polyacrylic acid, polydimethyldiallyl ammonium chloride, hydrolyzed poly(styrene-co-maleic anhydride), and hydrolyzed poly(methylvinylether-co-maleic anhydride). When thickener is used, the amount of thickener is preferably 0.05% to 3% by weight based on the weight of the aqueous medium.

Optionally, the aqueous medium contains one or more suspending agent. Suspending agents have molecular weight greater than 5,000 Da. Suspending agents include, for example, proteins such as gelatin, soy protein, hydrolyzed soy protein, wheat protein, spirulina, and rice protein; polysaccharides such as hydroxyethylcellulose, methylhydroxyethylcellulose, hydroxypropylmethylcellulose, carboxymethylcellulose, pectin, xanthan gum, gellan gum, sodium lignosulfonate, agar, carrageenan, sodium alginate, starch, gum arabic, and gum tragacanth. Further examples of suspending agents include polyacrylic acid with Type A gelatin, polydimethyldiallylammonium chloride with Type A gelatin, carboxymethyl cellulose, carboxymethylcellulose with hydroxypolyethylene alkylphenol and polyether phosphate ester, hydroxypropyl methylcellulose, hydroxypropyl methylcellulose with hydroxypolyethylene alkylphenol and polyether phosphate ester, and methylhydroxyethylcellulose. When suspending agent is present in the aqueous medium, the preferred amount is 0.05% to 3% by weight based on the weight of the aqueous medium.

Preferably, the aqueous medium contains one or more thickener, one or more suspending agent, or both.

Preferably, the polymerizable monomer droplets are formed by dispersing the monomer phase through the plurality of through holes of the membrane into the aqueous medium. Preferably, the monomer flow rates through the membrane is, in units of ml/min per 100 cm² of membrane surface, 0.2 or more; more preferably 0.5 or more. Preferably, the monomer flow rates through the membrane is, in units of ml/min per 100 cm² of membrane surface, 40 or less; more preferably 20 or less.

Preferably, the monomer droplets are directed into the aqueous medium by pumping or applying a pressure to the monomer phase, preferably by pumping. Preferably, the applied pressure is in the range of 0.01 to 1 bar and more preferably 0.1 to 0.5 bar.

Preferably, the interfacial tension between the monomer phase and the aqueous medium is 0.01 dyn/cm or higher; more preferably 0.5 dyn/cm or higher. Preferably, the interfacial tension between the monomer phase and the aqueous medium is 50 dyn/cm or lower; more preferably 30 dyn/cm or lower; more preferably 20 dyn/cm or lower; more preferably 15 dyn/cm or lower.

Preferably, a shear force is applied across the membrane at a point of egression of the monomer phase into the suspension phase. Without being bound by theory, the shear force is thought to interrupt the monomer flow through the membrane creating droplets. The shear force is preferably applied by rapidly displacing the membrane by vibrating, rotating, pulsing or oscillating movement. Preferably, the direction of shear is substantially perpendicular to the direction of egression of the monomer phase. Preferably, the membrane is vibrated, and the frequency of vibration of the membrane is 10 Hz or higher; more preferably 20 Hz or higher; more preferably 40 Hz or higher. Preferably, the frequency of vibration of the membrane is 1,000 Hz or lower; more preferably 500 Hz or lower; more preferably 200 Hz or lower.

Preferably the membrane is vibrated with an amplitude of 0.05 mm or more; more preferably 0.1 mm or more; more preferably 0.2 mm or more. Preferably the membrane is vibrated with an amplitude of 10 mm or less; more preferably 5 mm or less; more preferably 2 mm or less.

Preferably, the monomer droplets form a dispersion that has D50 of 15 micrometers or more; more preferably 50 micrometers or more. Preferably, the monomer droplets form a dispersion that has D50 of 200 micrometers or less; more preferably 150 micrometers or less.

Preferably, the monomer droplets for a dispersion that has uniformity coefficient (UC) of 1.0 to 5; more preferably 1.0 to 1.4; more preferably 1.0 to 1.3.

Preferably, after monomer droplets are formed, monomer within each droplet undergoes polymerization within that droplet, so that the monomer droplet becomes a particle of polymer. The polymerization process may be performed in any location. The polymerization may be performed while the aqueous medium is in the same location where the monomer droplets were formed or the aqueous medium may first be moved to another location or container. If the aqueous medium is moved, it may be moved either continuously or as a batch.

Preferably, after formation of the monomer droplets dispersed in the aqueous medium, the aqueous medium may be transferred to another container and heated to cause the initiator to form free radicals that start the polymerization process. Preferably, the monomer droplets become polymer particles after the polymerization process. Preferably, the polymer particles form a dispersion in the aqueous medium.

Preferably, the polymer particles form a dispersion that has D50 of 15 micrometers or more; more preferably 50 micrometers or more. Preferably, the polymer particles form a dispersion that has D50 of 200 micrometers or less; more preferably 150 micrometers or less.

Preferably, the polymer particles for a dispersion that has uniformity coefficient (UC) of 1.0 to 5; more preferably 1.0 to 1.4; more preferably 1.0 to 1.3.

The following is a description of a preferred embodiment as illustrated in Figure 1 and Figure 2.

A monomer phase container that comprises an outer wall 3 and an inner wall 4 is placed into outer container 1. Aqueous medium 2 surrounds the monomer phase container so that aqueous medium 2 is present between outer wall 2 and the surface of outer container 1 and so that aqueous medium 2 is present inside the circle formed by inner wall 4.

Monomer phase 6 enters the monomer phase container between the outer wall 3 and the inner wall 4, as shown by the single-headed arrows in Figure 2. Monomer phase is preferably placed into the monomer phase container and kept under pressure. The monomer phase container is vibrated up and down as shown by the double headed arrows in Figure 2. Thus the outer wall 3 and the inner wall 4 are vibrated up and down synchronously with each other. Monomer phase 6 passes through the holes 5 that are present in both the outer wall 3 and the inner wall 4 and passes into the aqueous phase 2. As the monomer phase 6 egresses from the holes 5, it forms droplets 7.

Optionally, a drain (not illustrated) may be attached to outer container 1 to allow aqueous medium in which monomer droplets are dispersed may be removed from outer container 1, either in discrete batches or continuously.

The following are examples of the present invention.

The following abbreviations are used:
GMA = Glycidyl Methacrylate
GlyDMA = Glycerol Dimethacrylate
EGDMA = Ethylene Glycol Dimethacrylate
PADMAC = Polyamine Dimethylammonium Chloride
DVB = Divinylbenzene
PVA = Polyvinyl Alcohol
SLS = Sodium Lauryl Sulfate

The membrane was as follows: The membrane was a commercial product manufactured by Micropore Technologies. The membrane consisted of two annular porous nickel metal sheets soldered at the ends with a hydrophilic coating applied to the nickel surfaces. A metal hollow tube connected to the top of the membrane allowed for monomer to be fed into the annular region between the nickel metal sheets as well as providing a site to attach the membrane to an oscillation source. On the membrane surface, circular pores of a singular diameter (5 or 20 microns) were spaced 200 microns apart in a hexagonal array on the membrane, giving the membrane an approximate pore density of 2900 pores per square centimeter.

The following procedure was used. Operations were performed at room temperature (approximately 25°C) unless otherwise state. The injection line and the membrane were cleaned by injecting distilled water (50 mL) and methanol (50 mL) under vibration. The membrane was cleaned with 4M sodium hydroxide solution, distilled water, 2% citric acid, and distilled water again under sonication (1 minute for each wash). The membrane was connected to the vibrator and placed into a beaker containing distilled water (500 mL). The monomer phase was injected into the injection line and membrane using a Vici M50 pump (manufactured by Valco Instruments Company) and under vibration until the membrane was filled with monomer. The beaker containing distilled water was replaced with a beaker containing the aqueous phase (800 mL). Uniform monomer droplets (100 g) were generated by starting vibration and monomer flow. Droplet size measurement was carried out using a Vision 500 Particle Sizer, supplied by Micropore Technologies, under stirring (100 rpm) and an image of the droplets was taken using an optical microscope with a digital camera. The droplets were transfer to a polymerization reactor charged Methocel K100 (hydroxypropyl methylcellulose, manufactured by The Dow Chemical Company) solution (1.5 %, 400 mL) under agitation (100 rpm). The reactor was heated according to the corresponding heating profile. After cooling to room temp, the copolymer beads were washed with water, methanol and water. Bead size measurement was carried out using a Vision 500 Particle Sizer, supplied by Micropore Technologies, under stirring (100 rpm) and an image of the droplets was taken using an optical microscope with a digital camera.

### Comparative Example C-1: Macroporous beads of composition #1 made without SLS

The conditions were as follows:

| | |
|---|---|
| Membrane pore size (µm) | 20 |
| Vibration frequency (Hz) | 60 |
| Vibration amplitude (mm) | 0.70 |
| Monomer flow rate (mL/min) | 2.0 |
| Monomer phase | GMA (19.5 g), monomer |
| | GlyDMA (13.0 g), monomer |
| | 4-Methyl-2-Pentanol (15.9 g), porogen |
| | Diethyl Phthalate (51.6 g), porogen |
| | Trigonox 21S (tert-Butyl peroxy-2-ethylhexanoate solution, AkzoNobel) (0.69 g), initiator |
| Molar mass of PVA (kDa) | 124 - 186 |
| PVA % in aqueous medium (based on the weight of the aqueous medium) | 1.0 wt % |
| Heating profile of polymerization | 1) Heated to 70°C over 45 minutes and held for 1 hour |
| | 2) Heated to 80°C over 30 minutes and held for 12 hours |

### Example 2: Macroporous beads of composition #1 made with SLS

The process of Comparative Example C1 was repeated, except for the following differences:

| | |
|---|---|
| Vibration frequency (Hz) | 62 |
| SLS in the aqueous medium (%), based on the weight of the aqueous medium | 1.0 wt % |

### Comparative Example C3: Macroporous beads of composition #2 made without SLS

The process of Comparative Example C1 was repeated, except for the following differences:

| | |
|---|---|
| Vibration amplitude (mm) | 0.60 |
| Monomer phase | GMA (17.7 g), monomer |
| | EGDMA (26.8 g), monomer |
| | Diethyl Phthalate (54.8 g), porogen |
| | Trigonox 21S (0.69 g), initiator |

### Example 4: Macroporous beads of composition #2 made with SLS

The process of Comparative Example C3 was repeated, except for the following differences:

| | |
|---|---|
| Vibration amplitude (mm) | 0.88 |
| SLS in the aqueous medium (%), based on the weight of the aqueous medium | 1.0 wt % |

### Comparative Example C5: Gellular resin of composition #3 made without SLS

The conditions were as follows.

| | |
|---|---|
| Membrane pore size (µm) | 5 |
| Vibration frequency (Hz) | 88 |
| Vibration amplitude (mm) | 0.60 |
| Monomer flow rate (mL/min) | 2.0 |
| Monomer phase | Styrene (86.7 g), monomer |
| | 63% DVB (12.6 g), monomer |
| | BPO (0.67 g), initiator |
| Molar mass of PVA (kDa) | 124-186 |
| PVA % in aqueous medium (based on the weight of the aqueous medium) | 1.0 wt % |
| Heating profile of polymerization | 1) heated to 79°C over 70 minutes then held for 135 min; |
| | 2) heated to 90°C over 45 minutes then held for 1 hour. |

### Example 6: Gellular resin of composition #3 made with SLS

The process of comparative Example C5 was repeated with the following exceptions:

| | |
|---|---|
| Membrane pore size (µm) | 20 |
| Vibration frequency (Hz) | 120 |
| Vibration amplitude (mm) | 0.40 |
| SLS in the aqueous medium (%), based on the weight of the aqueous medium | 1.0 wt % |

### Example 7: Results

| Example | Composition | SLS? | Monomer Droplet D50⁽¹⁾ | Monomer Droplet UC | Polymer Particle D50⁽¹⁾ | Polymer Particle UC |
|---|---|---|---|---|---|---|
| C1 | #1 | No | 84 | 1.19 | 91 | 1.29 |
| 2 | #1 | Yes | 42 | 1.20 | 44 | 1.19 |
| C3 | #2 | No | 89 | 1.18 | 89 | 1.18 |
| 4 | #2 | Yes | 43 | 1.20 | 47 | 1.24 |
| C5 | #3 | No | 79 | 1.21 | 73 | 1.27 |
| 6 | #3 | Yes | 23 | 1.24 | 19 | 1.13 |

| | | | | | | |
|---|---|---|---|---|---|---|
| Note (1): micrometers | | | | | | |

In every case, the example made with SLS showed smaller particle size in both monomer droplets and polymer particles than the corresponding comparative example having the same composition, and all the examples showed excellent uniformity coefficient.

## Claims

1. A method of producing monomer droplets (7) dispersed in an aqueous medium (2), wherein said method comprises
(a) providing an apparatus comprising a metallic membrane having a plurality of through holes (5); wherein a monomer phase (6) is in contact with a first side of said membrane; wherein an aqueous medium is in contact with a second side of said membrane; wherein said monomer phase is insoluble in said aqueous medium; wherein said aqueous medium (2) comprises 0.2% or more of one or more surfactant, by weight based on the weight of the aqueous medium; and
(b) conveying said monomer phase through said through holes into said aqueous medium (2) under conditions sufficient to form a plurality of monomer droplets; wherein a shear force is applied at a point of egression of the monomer phase (6) into the aqueous medium (2); wherein the direction of shear is perpendicular to the direction of egression of the monomer phase (6).

2. The method of claim 1, wherein said surfactant comprises an anionic surfactant or a nonionic surfactant or a mixture thereof.

3. The method of claim 1, wherein said surfactant comprises one or more anionic surfactant.

4. The method of claim 1, wherein the amount of said surfactant is 0.2% to 5% by weight based on the weight of said aqueous medium (2).

5. The method of claim 1, wherein 50% by volume of said monomer droplets (7) have diameter equal to or less than D50, and wherein D50 is 15 to 200 micrometers.

6. A method of making polymer particles comprising producing monomer droplets (7) by performing the method of claim 1 and then polymerizing some or all of the monomer in said monomer droplets.

7. The method of claim 6, wherein 50% by volume of said polymer particles have diameter equal to or less than D50, and wherein D50 is 15 to 200 micrometers.

## Patentansprüche

1. Ein Verfahren zum Produzieren von in einem wässrigen Medium (2) dispergierten Monomertröpfchen (7), wobei das Verfahren Folgendes beinhaltet:
(a) Bereitstellen einer Vorrichtung, die eine metallische Membran mit einer Vielzahl von Durchgangslöchern (5) beinhaltet; wobei sich eine Monomerphase (6) in Kontakt mit einer ersten Seite der Membran befindet; wobei sich ein wässriges Medium in Kontakt mit einer zweiten Seite der Membran befindet; wobei die Monomerphase in dem wässrigen Medium unlöslich ist; wobei das wässrige Medium (2) bezogen auf das Gewicht des wässrigen Mediums zu 0,2 Gew.-% oder mehr ein oder mehrere Tenside beinhaltet; und
(b) Befördern der Monomerphase durch die Durchgangslöcher in das wässrige Medium (2) unter Bedingungen, die ausreichen, um eine Vielzahl von Monomertröpfchen zu bilden; wobei an einem Austrittspunkt der Monomerphase (6) in das wässrige Medium (2) eine Scherkraft angewandt wird; wobei die Scherrichtung zu der Austrittsrichtung der Monomerphase (6) senkrecht ist.

2. Verfahren gemäß Anspruch 1, wobei das Tensid ein anionisches Tensid oder ein nichtionisches Tensid oder eine Mischung davon beinhaltet.

3. Verfahren gemäß Anspruch 1, wobei das Tensid ein oder mehrere anionische Tenside beinhaltet.

4. Verfahren gemäß Anspruch 1, wobei die Menge des Tensids bezogen auf das Gewicht des wässrigen Mediums (2) 0,2 Gew.-% bis 5 Gew.-% beträgt.

5. Verfahren gemäß Anspruch 1, wobei 50 Vol.-% der Monomertröpfchen (7) einen Durchmesser aufweisen, der gleich oder geringer als D50 ist, und wobei D50 15 bis 200 Mikrometer beträgt.

6. Ein Verfahren zum Herstellen von Polymerpartikeln, welches das Produzieren von Monomertröpfchen (7) durch Durchführen des Verfahrens gemäß Anspruch 1 und dann das Polymerisieren eines Teils oder allen Monomers in den Monomertröpfchen beinhaltet.

7. Verfahren gemäß Anspruch 6, wobei 50 Vol.-% der Polymerpartikel einen Durchmesser aufweisen, der gleich oder geringer als D50 ist, und wobei D50 15 bis 200 Mikrometer beträgt.

## Revendications

1. Un procédé de production de gouttelettes de monomère (7) dispersées dans un milieu aqueux (2), ledit procédé comprenant
(a) le fait de fournir un appareil comprenant une membrane métallique présentant une pluralité de trous traversants (5) ; dans lequel une phase de monomère (6) est en contact avec un premier côté de ladite membrane ; dans lequel un milieu aqueux est en contact avec un deuxième côté de ladite membrane ; dans lequel ladite phase de monomère est insoluble dans ledit milieu aqueux ; dans lequel ledit milieu aqueux (2) comprend 0,2 % ou plus d'un tensioactif ou plus, en poids rapporté au poids du milieu aqueux ; et
(b) le fait de faire passer ladite phase de monomère à travers lesdits trous traversants jusque dans ledit milieu aqueux (2) dans des conditions suffisantes pour former une pluralité de gouttelettes de monomère ; dans lequel une force de cisaillement est appliquée au niveau d'un point de sortie de la phase de monomère (6) dans le milieu aqueux (2) ; la direction de cisaillement étant perpendiculaire à la direction de sortie de la phase de monomère (6).

2. Le procédé de la revendication 1, dans lequel ledit tensioactif comprend un tensioactif anionique ou un tensioactif non ionique ou un mélange de ceux-ci.

3. Le procédé de la revendication 1, dans lequel ledit tensioactif comprend un tensioactif anionique ou plus.

4. Le procédé de la revendication 1, dans lequel la quantité dudit tensioactif fait de 0,2 % à 5 % en poids rapporté au poids dudit milieu aqueux (2).

5. Le procédé de la revendication 1, dans lequel 50 % en volume desdites gouttelettes de monomère (7) présentent un diamètre égal ou inférieur à D50, et dans lequel D50 fait de 15 à 200 micromètres.

6. Un procédé de réalisation de particules de polymère comprenant le fait de produire des gouttelettes de monomère (7) en exécutant le procédé de la revendication 1 et en polymérisant ensuite une partie ou la totalité du monomère dans lesdites gouttelettes de monomère.

7. Le procédé de la revendication 6, dans lequel 50 % en volume desdites particules de polymère présentent un diamètre égal ou inférieur à D50, et dans lequel D50 fait de 15 à 200 micromètres.
